# EUROPÄISCHE PATENTSCHRIFT

(11) **EP 3 207 612 B1**
(45) Veröffentlichungstag und Bekanntmachung des Hinweises auf die Patenterteilung: **14.04.2021**
(21) Anmeldenummer: 14825306.5
(22) Anmeldetag: 18.12.2014
(51) Int. Cl.: H02J 1/00, H01H 9/30, H01H 33/59, H01H 9/54

(54) **GLEICHSTROMLEISTUNGSSCHALTER MIT IMPULSSTROMEINHEIT SOWIE VERFAHREN ZUM SCHALTEN EINES GLEICHSTROMES**
DC CIRCUIT BREAKER WITH PULSE CURRENT UNIT, AND METHOD FOR SWITCHING A DIRECT CURRENT
INTERRUPTEUR DE PUISSANCE DE COURANT CONTINU COMPRENANT UNE UNITÉ DE COURANT IMPULSIONNEL AINSI QUE PROCÉDÉ SERVANT À COMMUTER UN COURANT CONTINU

(43) Veröffentlichungstag der Anmeldung: 23.08.2017
(73) Patentinhaber: Siemens Energy Global GmbH & Co. KG, 81739 München (DE)
(72) Erfinder: ERGIN, Dominik, 91083 Baiersdorf (DE); GAMBACH, Herbert, 91080 Uttenreuth (DE)
(86) Internationale Anmeldenummer: PCT/EP2014/078490
(87) Internationale Veröffentlichungsnummer: WO 2016/096016

(56) Entgegenhaltungen:
- WO-A1-2014/117807
- DE-B3-102011 083 693
- US-A- 3 665 286
- US-A- 5 793 586
- GYSEL U: "Störsicherer Entwurf von elektronischen Geräten und Komponenten (EMV)", INTERNET CITATION, 2002, Seiten 1-20, XP002481946, Gefunden im Internet: URL:https://home.zhaw.ch/gys/HFf/EMVf/EMV. pdf [gefunden am 2002-01-01]
- RUDRAKSH KAPOOR ET AL: "State of art of power electronics in circuit breaker technology", ENERGY CONVERSION CONGRESS AND EXPOSITION (ECCE), 2012 IEEE, IEEE, 15. September 2012 (2012-09-15), Seiten 615-622, XP032467571, DOI: 10.1109/ECCE.2012.6342764 ISBN: 978-1-4673-0802-1

## Beschreibung

Die Erfindung betrifft eine Vorrichtung zum Schalten eines Gleichstromes in einer Gleichspannungsleitung, umfassend einen seriell in einen Gleichspannungsleiter der Gleichspannungsleitung einfügbaren Betriebsstromzweig mit einem steuerbaren Schalter und eine zweipolige Stromimpulseinheit mit einem Parallelschwingkreis aus einem kapazitiven Energiespeicher und einer dazu parallel geschalteten, eine Induktivität und einen steuerbaren Impulsschalter aufweisenden Reihenschaltung, wobei durch Schalten des Impulsschalters ein Impulsstrom erzeugbar ist, der entgegen dem zu schaltenden Gleichstrom fließt und einen Stromnulldurchgang im steuerbaren Schalter bewirkt.

Gleichstromleistungsschalter finden insbesondere in Hochspannungsgleichstromübertragungsnetzen (HGÜ-Netzen) Anwendung. Dort werden sie zum Schalten von Betriebs- und Fehlerströmen eingesetzt.

Eine Vorrichtung der eingangs genannten Art ist in der Druckschrift WO 2012/069468 A2 beschrieben. Die aus der WO 2012/069468 A2 bekannte Vorrichtung ist in Figur 1 schematisch dargestellt. Die bekannte Vorrichtung 1 ist bidirektional ausgeführt, das heißt, dass der Gleichstrom unabhängig von einer Stromrichtung geschaltet werden kann. Die bekannte Vorrichtung 1 weist zwei steuerbare Schalter 2, 3 auf, die in den Gleichspannungsleiter 4 eingefügt sind. An einen Potenzialpunkt zwischen den Schaltern 2, 3 ist eine zweipolige Stromimpulseinheit 5 mit ihrem ersten Pol angeschlossen. Die Stromimpulseinheit 5 umfasst einen Parallelschwingkreis aus einem Energiespeicher 6 sowie einer Reihenschaltung mit einem Impulsschalter 7 und einer Induktivität 8. Der zweite Pol der Impulseinheit 5 ist direkt mit einem Gleichspannungs-Rückleiter 9 verbunden, der hierbei durch eine Erdverbindung gegeben ist. Ferner weist die bekannte Vorrichtung 1 zwei Dämpfungszweige 10, 11, die zwischen dem Gleichspannungsleiter 4 und dem Gleichspannungs-Rückleiter 9 angeordnet sind. Bezüglich der weiteren Details der Vorrichtung 1 wird hiermit auf die Offenbarung der WO 2012/069468 A2 verwiesen.

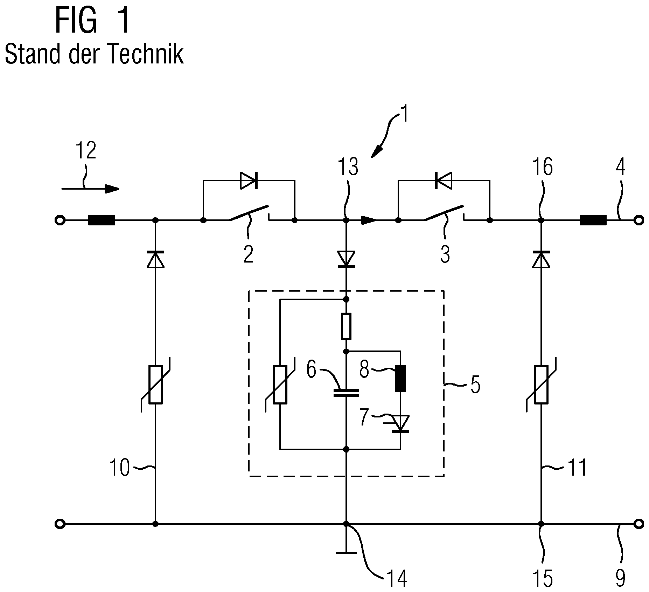

Zum Schalten eines Gleichstromes mit einer mittels eines Pfeils 12 angedeuteten Stromrichtung wird der steuerbare Schalter 3 angesteuert, zu öffnen. Dabei zündet im Schalter 3 üblicherweise ein Lichtbogen, so dass der Gleichstrom zunächst weiterhin durch den Schalter 3 fließt. Der Impulsschalter 7 wird eingeschaltet, so dass eine Umpolung des Energiespeichers 6 über die Induktivität 8 bewirkt wird. Der umgepolte Energiespeicher 6 erzeugt einen Impulsstrom, der durch die Impulseinheit 5 und den Dämpfungszweig 11 fließt, und zwar im Schalter 3 in Richtung entgegen dem abzuschaltenden Gleichstrom. Dabei wird der Lichtbogen im Schalter 3 gelöscht. Anschließend teilt sich der abzuschaltende Gleichstrom, der aufgrund von Systeminduktivitäten weiter fließt, auf zwei Strompfade bzw. zwei Stromkreise. Der eine Strompfad verläuft in der Gleichspannungsleitung 4 (in Figur 1 von links nach rechts gemäß dem Pfeil 12) über den steuerbaren Schalter 2 bzw. die dazu parallele Diode bis zu einem Knotenpunkt 13 zwischen den Schaltern 2, 3, die Impulseinheit 5 sowie ab einem Knotenpunkt 14 durch den Gleichspannungs-Rückleiter 9. Der andere Strompfad verläuft durch den Gleichspannungs-Rückleiter 9 (in Figur 1 von rechts nach links) bis zu einem Knotenpunkt 15, durch den Dämpfungszweig 11 und über einen Knotenpunkt 16 durch den Gleichspannungsleiter 4. Der durch die Impulseinheit 5 fließende Gleichstrom polt den Energiespeicher 6 um, so dass dieser die ursprüngliche Polarität erlangt.

Die Druckschrift WO 2014/117807 A1 offenbart einen weiteren Gleichstromleistungsschalter mit einem mechanischen Schalter, der seriell in die Gleichspannungsleitung eingefügt ist. Parallel zum mechanischen Schalter ist ein Parallelzweig angeordnet, der eine Reihenschaltung aus einem Kondensator einer Induktivität sowie einen Thyristor aufweist. Der Kondensator ist dabei derart aufgeladen, dass bei Zündung des Thyristors ein Impulsstrom erzeugt wird, der in einer durch den mechanischen Schalter und den Parallelzweig definierten Masche entgegen dem abzuschaltenden Gleichstrom fließt, wobei der Kondensator umgepolt wird. Auf diese Weise kann ein beim Öffnen des mechanischen Schalters entstandener Lichtbogen gelöscht werden. Damit der Gleichstromleistungsschalter in dessen Anfangskonfiguration überführt werden kann, ist der Reihenschaltung aus Kondensator und Induktivität ein Umpolungshalbleiterschalter parallel geschaltet. Nach dem beendeten Abschaltvorgang kann der Umpolungshalbleiterschalter eingeschaltet werden, wodurch der Kondensator ein weiteres Mal umgepolt wird.

Somit basieren die beiden bekannten Vorrichtungen auf unterschiedlichen Funktionsprinzipien. Es ist zu beachten, dass der Energiespeicher der aus der WO 2014/117807 A1 bekannten Vorrichtung vor dem Abschaltvorgang eine andere Polarität als der Energiespeicher der Vorrichtung der WO 2012/069468 A2 haben muss.

Eine Vorrichtung nach dem Oberbegriff des Patentanspruchs 1 ist aus der DE 10 2011 083 693 B3 bekannt.

Die US 5 793 586 A beschreibt einen Gleichspannungsschalter, bei dem mechanische Schalter im Betriebsstromzweig angeordnet sind. In einem Abschaltzweig parallel zum Betriebsstromzweig ist ein Thyristor angeordnet. Dieser Thyristor wird im Fehlerfall geöffnet, so dass beim Öffnen der mechanischen Schalter im Betriebsstromzweig der Fehlerstrom auf den Abschaltzweig kommutiert wird. Ein Schwingkreis parallel zum Thyristor im Abschaltzweig erzeugt einen Stromimpuls, der einen Nullstrom im Abschaltzweig bewirkt und dadurch eine Abschaltung des Thyristors.

Aus dem Beitrag "State of the Art of Power Electronics in Circuit Breaker Technology" von Kapoor et al. sind weitere Konzepte von Gleichspannungsschaltern bekannt.

Die Aufgabe der vorliegenden Erfindung ist es, eine artgemäße Vorrichtung vorzugschlagen, die ein möglichst zuverlässiges Schalten des Gleichstromes ermöglicht.

Die Aufgabe wird bei einer artgemäßen Vorrichtung dadurch gelöst, dass die Stromimpulseinheit in einem von einem elektrischen Potenzial eines Gleichspannungs-Rückleiters der Gleichspannungsleitung entkoppelten Überbrückungszweig angeordnet ist, der einen Strompfad parallel zum steuerbaren Schalter ausbildet, wobei der Impulsstrom in einer durch den Betriebsstromzweig und den parallelen Strompfad gebildeten Masche fließt.

Hierbei soll die Entkopplung der Potenziale im Überbrückungszweig und im Gleichspannungs-Rückleiter derart verstanden werden, dass zwischen ihnen keine unmittelbare Verbindung besteht, so dass zumindest zeitweise, geeigneterweise während des Abschaltvorgangs, der gesamte Überbrückungszweig und der Gleichspannungs-Rückleiter auf unterschiedlichen Potenzialen liegen.

Im Rahmen der Erfindung kann der Gleichspannungs-Rückleiter beispielsweise durch einen negativen Leiter oder auch durch einen Erdleiter beziehungsweise eine Erdverbindung einer als Bipol ausgebildeten Gleichspannungsleitung gegeben sein.

Ein Vorteil der erfindungsgemäßen Vorrichtung liegt darin, dass die oben beschriebene Aufteilung des abzuschaltenden Gleichstromes auf zwei Stromkreise vermieden werden kann. Nach dem Verlöschen des Lichtbogens im steuerbaren Schalter fließt nämlich der abzuschaltende Gleichstrom in der erfindungsgemäßen Vorrichtung im Überbrückungszweig weiter, der vom elektrischen Potenzial des Gleichspannungs-Rückleiters entkoppelt ist. Mit anderen Worten ändert sich die Topologie des Stromkreises im Abschaltmoment nicht. In diesem Zusammenhang wird auch von einer Abschaltgegenspannung als Längsspannung gesprochen. Somit erlaubt die erfindungsgemäße Vorrichtung eine bessere Kontrolle des abzuschaltenden Gleichstromes und etwaiger durch den Schaltvorgang auftretender Netzrückwirkungen.

Die erfindungsgemäße Vorrichtung weist zudem gegenüber dem aus der WO 2014/117807 A1 bekannten Gleichspannungsleistungsschalter den Vorteil auf, dass auf einen zusätzlichen Umpolungshalbleiterschalter verzichtet werden kann, weil der abzuschaltende Gleichstrom selbst den Energiespeicher umpolt.

Vorzugsweise umfasst die Vorrichtung ferner einen Überspannungsableiter, der eine Parallelschaltung zu einer Reihenschaltung ausbildet, die den Energiespeicher sowie einen Stromimpulseinheit-Widerstand umfasst. Der Überspannungsableiter hat die Funktion, die am Energiespeicher maximal abfallenden Spannungen zu begrenzen und die in der Gleichspannungsleitung induktiv gespeicherte Energie während der Abschaltung zu absorbieren. Dabei kann der Überspannungsableiter eine bezüglich einer Nullspannung asymmetrische Kennlinie aufweisen, so dass die maximalen Spannungen bei unterschiedlicher Polung des Energiespeichers unterschiedlich sind. Ferner kann der Überspannungsableiter die Energie des abzuschaltenden Gleichstromes in Wärme umsetzen, so dass der Gleichstrom abgebaut und schließlich abgeschaltet werden kann, wenn er durch den Überspannungsableiter fließt. Mittels des Stromimpulseinheit-Widerstandes ist die maximale am Energiespeicher abfallende Spannung zusätzlich einstellbar.

Gemäß einer bevorzugten Ausführungsform umfasst die Vorrichtung ferner ein resistives Bauelement, das derart im Überbrückungszweig angeordnet ist, dass der abzuschaltende Gleichstrom über das resistive Bauelement geführt werden kann. Beispielsweise kann das resistive Bauelement in Reihe zur Stromimpulseinheit angeordnet sein. Das resistive Bauelement ist bevorzugt ein nichtlineares Widerstandselement, beispielsweise ein Varistor, wie z.B. ein Metalloxidvaristor. Fließt der abzuschaltende Gleichstrom über das resistive Bauelement, so kann die im Gleichstrom gespeicherte Energie abgebaut werden, so dass der Gleichstrom schließlich abgeschaltet wird.

Gemäß der Erfindung weist die Vorrichtung ferner eine Vorladeeinheit auf, wobei der Energiespeicher mittels der Vorladeeinheit aufgeladen werden kann. Die Vorladeeinheit kann beispielsweise eine Energie- bzw. eine Spannungsquelle umfassen. Sie kann aber auch in der Gleichspannungsleitung vorhandene Spannungen nutzen. Der Energiespeicher wird bei der erfindungsgemäßen Vorrichtung mit einer von der Stromrichtung des abzuschaltenden Gleichstromes unabhängigen Polarität vorgeladen. Die Polarität der Spannung am Energiespeicher ist also nur durch die Potenziale des Gleichspannungsleiters und des Gleichspannungs-Rückleiters bestimmt. Mit anderen Worten: Wird der vorgeladene Energiespeicher mit dem Gleichspannungsleiter elektrisch verbunden, so findet keine Umpolung des Energiespeichers allein aufgrund des Gleichstromes im Gleichspannungsleiter statt.

Erfindungsgemäß umfasst die Vorladeeinheit einen zwischen der Stromimpulseinheit und dem Gleichspannungs-Rückleiter angeordneten Vorladewiderstand. Der Vorladewiderstand ist beispielsweise hochohmig ausgebildet und weist einen Widerstandswert zwischen 100 kΩ und 2 MΩ, bevorzugt zwischen 300 kΩ und 700 kΩ, auf. Zum Vorladen des Energiespeichers kann ein Strom zwischen dem Gleichspannungsleiter und dem Gleichspannungs-Rückleiter über den Energiespeicher und den Vorladewiderstand fließen, wobei der Energiespeicher aufgeladen wird.

Bevorzugt ist der steuerbare Schalter ein mechanischer Schalter, vorzugsweise eine Vakuumschaltröhre. Ein mechanischer Schalter ist besonders einfach und kostengünstig. Durch die Verwendung einer aus dem Stand der Technik bekannten Vakuumschaltröhre können die Kosten der Vorrichtung weiter gesenkt werden. Dem steuerbaren Schalter kann eine entgegen der Stromrichtung des abzuschaltenden Gleichstromes leitfähige Halbleiterdiode parallel geschaltet sein. Vorzugsweise umfasst die Vorrichtung eine Mehrzahl von in Reihe geschalteten steuerbaren Schaltern mit parallel geschalteten Halbleiterdioden. Auf diese Weise kann eine Spannungsfestigkeit der einzelnen steuerbaren Schalter kleiner gewählt werden, was kostengünstig ist.

Bevorzugt ist die Vorrichtung derart ausgebildet, dass mittels der Vorrichtung Gleichströme unabhängig von ihrer Stromrichtung geschaltet werden können. In diesem Fall wird auch von einer bidirektionalen Schaltvorrichtung gesprochen. Dementsprechend umfasst die Vorrichtung gemäß einer Ausführungsform einen weiteren steuerbarer Schalter im Betriebsstromzweig, wobei dem weiteren steuerbaren Schalter eine in Stromrichtung des abzuschaltenden Gleichstromes leitfähige weitere Halbleiterdiode parallel geschaltet ist, und wobei ein weiterer Überbrückungszweig vorgesehen ist, der einen den weiteren steuerbaren Schalter überbrückenden Strompfad ausbildet, wobei die Stromimpulseinheit im weiteren Überbrückungszweig angeordnet ist. Dies kann insbesondere bedeuten, dass der Überbrückungszweig und der weitere Überbrückungszweig zumindest teilweise zusammenfallen. Ist die Stromrichtung des abzuschaltenden Gleichstromes vorgegeben, so kann beispielsweise der Überbrückungszweig mit einem ersten Ende an einem Potenzialpunkt zwischen dem steuerbaren Schalter und dem weiteren steuerbaren Schalter mit der Gleichspannungsleitung verbunden sein und mit einem zweiten Ende an einem Potenzialpunkt in Stromrichtung hinter dem steuerbaren Schalter mit der Gleichspannungsleitung verbunden sein. Die Stromimpulseinheit kann im Überbrückungszweig zwischen dem ersten Ende des Überbrückungszweiges und einem mittleren Potenzialpunkt im Überbrückungszweig angeordnet sein. Der weitere Überbrückungszweig kann entsprechend mit seinem ersten Ende an einem Potenzialpunkt in Stromrichtung des abzuschaltenden Gleichstromes vor dem weiteren steuerbaren Schalter mit dem Gleichspannungsleiter verbunden sein und mit einem zweiten Ende mit einem Potenzialpunkt zwischen dem steuerbaren Schalter und dem weiteren steuerbaren Schalter mit dem Gleichspannungsleiter verbunden sein. Es kann dabei von Vorteil sein, wenn ein Teilabschnitt des Überbrückungszweiges, der sich zwischen dessen erstem Ende und dem mittleren Potenzialpunkt erstreckt, zugleich einen Teilabschnitt des weiteren Überbrückungszweiges ausbildet. In diesem Fall erstreckt sich der weitere Überbrückungszweig zwischen dem ersten Ende des Überbrückungszweiges, der hierbei mit dem zweiten Ende des weiteren Überbrückungszweiges zusammenfällt, und dem mittleren Potenzialpunkt und weiter zwischen dem mittleren Potenzialpunkt und dem ersten Ende des weiteren Überbrückungszweiges. Auf diese Weise kann dieselbe Stromimpulseinheit sowohl für den Überbrückungszweig als auch für den weiteren Überbrückungszweig verwendet werden. Bevorzugt ist der weitere Überbrückungszweig zum Überbrückungszweig gleichartig aufgebaut, insbesondere können beide gleichartige Bauelemente umfassen.

Vorzugsweise ist die Induktivität der Stromimpulseinheit als eine Luftspule, eine sättigbare Spule oder eine Kombination der beiden ausgebildet.

Ferner weist der Überbrückungszweig vorzugsweise ein in Reihe zur Stromimpulseinheit geschaltetes Halbleiterelement mit einer Durchlassrichtung und einer Sperrrichtung auf. Geeigneterweise ist das Halbleiterelement in Stromrichtung des abzuschaltenden Stromes durchlassfähig. Der Überbrückungszweig kann einen Strom umgekehrter Polarität bzw. Stromrichtung damit nicht führen.

Bevorzugt ist das Halbleiterelement eine Diode oder ein Thyristor.

Gemäß einer vorteilhaften Ausführungsform der Erfindung weist die Vorrichtung ein im Überbrückungszweig in Reihe zur Stromimpulseinheit geschaltetes nichtlineares Widerstandselement auf. Das nichtlineare Widerstandselement führt nach dem Verlöschen des Lichtbogens im steuerbaren Schalter den Gleichstrom. Mittels des nichtlinearen Widerstandselementes kann der abzuschaltende Gleichstrom gedämpft werden, wobei elektrische Energie in Wärme umgewandelt wird, so dass der Gleichstrom abgeschaltet werden kann. Das nichtlineare Widerstandselement kann ein Varistor, beispielsweise ein Metalloxid-Varistor sein.

Gemäß einer weiteren Ausführungsform umfasst die Vorrichtung eine Mehrzahl weiterer zweipoliger Stromimpulseinheiten, wobei die Stromimpulseinheit und die weiteren Stromimpulseinheiten gleichartig ausgebildet sind und im Überbrückungszweig eine Reihenschaltung ausbilden. Werden die Impulsschalter gleichzeitig angesteuert, so verhält sich die Reihenschaltung der Stromimpulseinheit und der weiteren Stromimpulseinheiten grundsätzlich wie eine einzige Stromipulseinheit. Die Impulsschalter sind geeigneterweise auch einzeln ansteuerbar. Damit ist es möglich, die von der Vorrichtung erzeugten (Gegen-)Spannungen und (Gegen-)Ströme gezielt einzustellen. Dabei erzeugt jede der Stromimpulseinheiten einen Stromimpuls. Eine weitere Anwendung dieser Ausführung der Vorrichtung wäre eine Vorladung der Gleichspannungsleitung vor dem Wiederzuschalten.

Es kann von Vorteil sein, wenn zwischen dem Gleichspannungsleiter und dem Gleichspannungs-Rückleiter ein Ableiter zur Begrenzung von Potenzialänderungen geschaltet ist. Mittels des Ableiters kann eine Anhebung eines Potenzials an der Stromimpulseinheit erreicht werden. Nachteilige Potenzialüberhöhungen können auf diese Weise vermieden werden.

Sowohl die unidirektionale Ausführung der erfindungsgemäßen Vorrichtung, mittels der ein Gleichstrom nur in einer Stromrichtung geschaltet werden kann, als auch die bidirektionale Ausführung der erfindungsgemäßen Vorrichtung können eine modulare Anordnung im Gleichspannungsleiter ausbilden. Dazu sind mehrere erfindungsgemäße Vorrichtungen in den Gleichspannungsleiter hintereinander einzufügen. Ein Vorteil dieser Ausführungsform besteht darin, dass jeder der steuerbaren Schalter der Vorrichtungen einer solchen Anordnung einzeln geschaltet und gelöscht werden kann, wodurch die Anordnung eine hohe Flexibilität aufweist.

Die Vorrichtung kann auch in einem Netzknoten eines Gleichspannungsnetzes eingesetzt werden. Dabei kann der Netzknoten eine Mehrzahl von Leitungsabgängen aufweisen. Die Vorrichtung kann jeweils einen steuerbaren Schalter sowie einen Überbrückungszweig mit einer Stromimpulseinheit in jedem der Leitungsabgänge umfassen, so dass mittels der Vorrichtung der Gleichstrom in allen Leitungsabgängen des Netzknotens geschaltet werden kann. Vorzugsweise fallen die Überbrückungszweige zumindest teilweise zusammen, so dass die Vorrichtung genau eine Stromimpulseinheit beziehungsweise genau eine Reihenschaltung von Stromimpulseinheiten für alle Überbrückungszweige umfasst.

Es ist von Vorteil, wenn die Vorrichtung über eine geeignete Steuereinrichtung zum Ansteuern des steuerbaren Schalters und des Impulsschalters aufweist. Es ist dabei zu bemerken, dass die Zeitliche Abfolge, nach der der steuerbare Schalter und der Impulsschalter angesteuert werden, von den jeweiligen Anforderungen und der Beschaffenheit und insbesondere von den Reaktionszeiten des mechanischen Schalters und des Impulsschalters abhängen und entsprechend geeignet zu wählen ist.

Geeigneterweise wird der Gleichstrom in einem Bedarfsfall, beispielsweise bei einem Kurzschluss in der Gleichspannungsleitung, geschaltet. Ob ein derartiger Bedarfsfall vorliegt, kann beispielsweise mittels einer geeigneten Fehlererfassungsvorrichtung festgestellt werden. Die Fehlererfassungsvorrichtung ist dazu eingerichtet, die Information darüber, ob der Bedarfsfall vorliegt, an die Steuereinrichtung zu übertragen.

Es an dieser Stelle angemerkt, dass alle oben beschriebenen Halbleiterelemente der Schaltung, wie Dioden, Ableiter und/oder Thyristoren auch als Reihenschaltungen solcher Bauteile realisiert werden können. Dies erlaubt vorteilhaft des Einsatzes kleiner dimensionierten Bauteile.

Die Erfindung betrifft ferner ein Verfahren zum Schalten eines Gleichstromes in einer Gleichspannungsleitung.

Derartige Verfahren sind aus dem Stand der Technik, beispielsweise aus den beiden oben zitierten Druckschriften, bekannt.

Eine Aufgabe der Erfindung besteht darin, ein artgemäßes Verfahren vorzuschlagen, das möglichst zuverlässig ist.

Die Aufgabe wird durch ein artgemäßes Verfahren gelöst, bei dem auf einen Steuerbefehl hin ein seriell in einen Gleichspannungsleiter der Gleichspannungsleitung eingefügter steuerbarer Schalter geöffnet wird, und in einer zweipoligen Stromimpulseinheit, die in einem Überbrückungszweig, der einen zum steuerbaren Schalter parallelen Strompfad ausbildet, angeordnet ist und einen Parallelschwingkreis aus einem kapazitiven Energiespeicher und einer dazu parallel geschalteten, eine Induktivität und einen steuerbaren Impulsschalter aufweisenden Reihenschaltung umfasst, der Impulsschalter geschaltet wird, so dass der Energiespeicher umgepolt und der umgepolte Energiespeicher einen Impulsstrom erzeugt, der entgegen dem abzuschaltenden Gleichstrom fließt und einen Stromnulldurchgang im steuerbaren Schalter bewirkt. Geeigneterweise wird der Energiespeicher, der beispielsweise ein Kondensator, insbesondere ein Hochleistungskondensator sein kann, von dem abzuschaltenden Strom ein weiteres Mal umgepolt. Auf diese Weise erlangt der Energiespeicher ohne weitere Maßnahmen seinen Ursprungszustand und kann erneut eingesetzt werden.

Mittels des erfindungsgemäßen Verfahrens können die zuvor im Zusammenhang mit der erfindungsgemäßen Vorrichtung beschriebenen Vorteile verwirklicht werden.

Gemäß einer bevorzugten Ausführungsform des Verfahrens wird der abzuschaltende Gleichstrom über ein im Überbrückungszweig angeordnetes resistives Bauelement geführt. Auf diese Weise kann der Gleichstrom reduziert und schließlich abgeschaltet werden.

Die Erfindung soll im Folgenden anhand von den Figuren 2 bis 7 dargestellten Ausführungsbeispielen näher erläutert werden.
Figur 2 zeigt eine schematische Darstellung eines Ausführungsbeispiels einer erfindungsgemäßen Vorrichtung zum Schalten eines Gleichstromes;
Figur 3 zeigt eine schematische Darstellung eines Ausführungsbeispiels einer Anordnung mit mehreren Vorrichtungen zum Schalten eines Gleichstromes;
Figur 4 zeigt eine schematische Darstellung eines weiteren Ausführungsbeispiels der erfindungsgemäßen Vorrichtung;
Figur 5 zeigt eine schematische Darstellung eines bidirektionalen Ausführungsbeispiels der erfindungsgemäßen Vorrichtung;
Figur 6 zeigt eine schematische Darstellung eines weiteren bidirektionalen Ausführungsbeispiels der erfindungsgemäßen Vorrichtung;
Figur 7 zeigt eine schematische Darstellung eines Ausführungsbeispiels der erfindungsgemäßen Vorrichtung in einem Netzknoten eines Gleichspannungsnetzes.

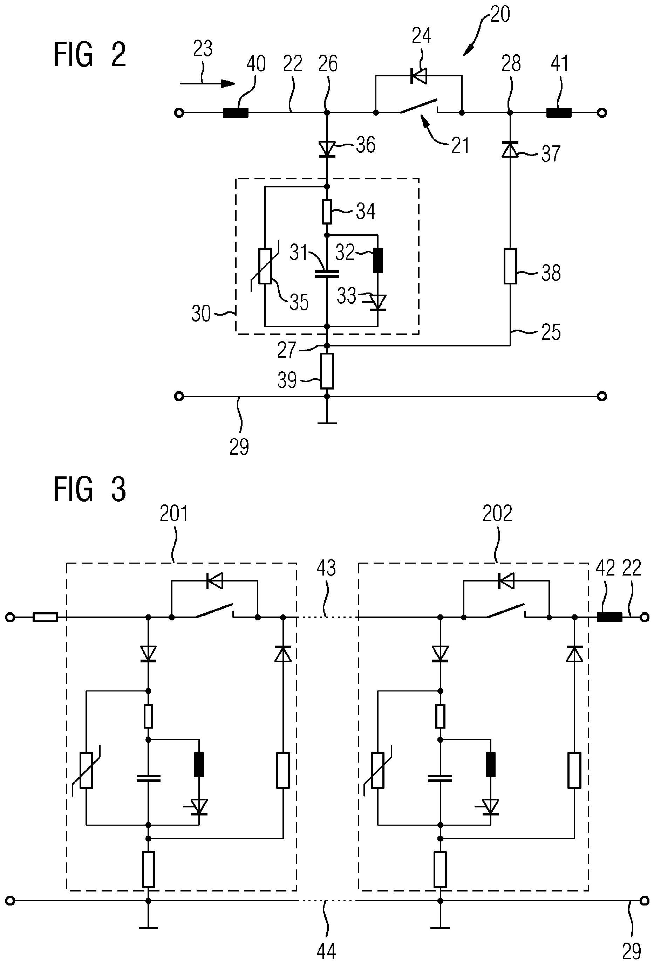

Im Einzelnen zeigt Figur 2 ein Ausführungsbeispiel einer erfindungsgemäßen Vorrichtung 20 zum Schalten eines Gleichstromes in einer Gleichspannungsleitung. Die Vorrichtung 20 umfasst einen steuerbaren Schalter 21, der in dem in Figur 2 dargestellten Ausführungsbeispiel ein mechanischer Schalter ist. Der mechanische Schalter 21 ist in einen Gleichspannungsleiter 22 der Gleichspannungsleitung eingefügt. Im Normalbetrieb ist der mechanische Schalter 22 geschlossen und führt den Gleichstrom, dessen Stromrichtung in Figur 2 mit einem Pfeil 23 angedeutet ist. Dem mechanischen Schalter 21 ist eine Halbleiterdiode 24 parallel geschaltet, mit einer Durchlassrichtung entgegen der Stromrichtung.

Die Vorrichtung 20 umfasst ferner einen Überbrückungszweig 25. Der Überbrückungszweig 25 bildet einen Strompfad aus, der zwischen einem ersten Knotenpunkt 26 und einen zweiten Knotenpunkt 27 sowie zwischen dem Knotenpunkt 27 sowie einem dritten Knotenpunkt 28 verläuft und damit einen Parallelstrompfad zum steuerbaren Schalter 21 definiert. Der Überbrückungszweig 25 ist von einem Potenzial eines Gleichspannungs-Rückleiters 29 entkoppelt. Die Entkopplung wird dadurch erreicht, dass durch geeignete Bemessung der Bauteile der Vorrichtung 20 der abzuschaltende Gleichstrom im Wesentlichen nicht direkt zwischen dem Gleichspannungsleiter und dem Gleichspannungs-Rückleiter fließt. Der Gleichspannungs-Rückleiter 29 ist in dem in Figur 2 dargestellten Ausführungsbeispiel ein Erdleiter bzw. Neutralleiter.

Die Vorrichtung 20 umfasst ferner eine Stromimpulseinheit 30, die im Überbrückungszweig 25 angeordnet ist. Die Stromimpulseinheit 30 umfasst einen Parallelschwingkreis mit einem kapazitiven Energiespeicher in Form eines Kondensators 31, beispielsweise eines Hochleistungskondensators, und einer dazu parallel geschalteten Reihenschaltung aus einer Induktivität 32 und einem Impulsschalter 33, der im vorliegenden Ausführungsbeispiel durch einen Thyristor gegeben ist. In Reihe zum Parallelschwingkreis ist ein Stromimpuls-Widerstand 34 angeordnet. In einer Parallelschaltung zum Stromimpuls-Widerstand 34 und dem Parallelschwingkreis ist ein Überspannungsableiter 35 angeordnet.

Der Überbrückungszweig 25 weist zudem eine erste Diode 36 sowie eine zweite Diode 37 auf. Die beiden Dioden 36, 37 weisen eine Durchlassrichtung auf, die der Stromrichtung des Gleichstromes entspricht und durch den Pfeil 23 angedeutet ist. Die Diode 36 verhindert eine ungewollte Entladung des Kondensators 31. Die Diode 37 ermöglicht durch Potenzialentkopplung die Vorladung des Kondensators 31. Darüber hinaus ist im Überbrückungszweig 25 ein nichtlineares Widerstandselement 38 in Form eines Ableiters angeordnet.

Die Vorrichtung 20 umfasst ferner eine Vorladeeinheit mit einem Vorladewiderstand 39, der zwischen dem zweiten Knotenpunkt 27 und dem Gleichspannungs-Rückleiter 29 angeordnet ist, so dass der Überbrückungszweig 25 über den Vorladewiderstand 39 mit dem Gleichspannungs-Rückleiter 29 verbunden ist. Der Vorladewiderstand 39 ist hochohmig ausgebildet und weist im vorliegenden Ausführungsbeispiel einen Widerstandswert von 400 kΩ auf. Zur Vorladung nutzt die Vorrichtung die Potenzialdifferenz zwischen dem Gleichspannungsleiter und dem Gleichspannungs-Rückleiter. Dementsprechend ist der Energiespeicher 31 in der Darstellung der Figur 2 auf der zum Gleichspannungsleiter weisenden Seite positiv geladen (bei Stromrichtung gemäß dem Pfeil 23).

Die Vorrichtung 20 ist dazu geeignet, den Gleichstrom mit der durch den Pfeil 23 vorgegebenen Stromrichtung zu schalten. Die Diode 24 ist dazu eingerichtet, den Schalter 21 im Abschaltmoment zu entlasten. Die Diode 24 kann durch eine Reihenschaltung von (beispielsweise 100 bis 300) Dioden ersetzt sein, wobei die Vorwärtsspannung der Reihenschaltung der Dioden im dargestellten Ausführungsbeispiel zwischen 200 V und 700 V liegt.

In einem Bedarfsfall, beispielsweise bei einem Kurzschluss in der Gleichspannungsleitung, wird der mechanische Schalter 21 mittels einer in Figur 2 nicht dargestellten Steuerung angesteuert, zu öffnen. Da der mechanische Schalter 21 eine gewisse Zeit zum Öffnen seiner Kontaktelemente braucht, wird gleichzeitig der Impulsschalter 33 eingeschaltet. Es ist dabei zu bemerken, dass die zeitliche Abfolge, nach der der mechanische Schalter 21 und der Impulsschalter 33 angesteuert werden, von den jeweiligen Anforderungen und der Beschaffenheit und insbesondere von den Reaktionszeiten des mechanischen Schalters 21 und des Impulsschalters 33 abhängen und entsprechend geeignet zu wählen ist.

Des Weiteren ist anzumerken, dass ob ein Kurzschluss oder anderer Bedarfsfall vorliegt, beispielsweise mittels einer geeigneten, figürlich nicht dargestellten Fehlererfassungsvorrichtung festgestellt werden kann, wobei die Fehlererfassungsvorrichtung die Information darüber, ob der Bedarfsfall vorliegt, an die Steuerung übertragen kann.

Ist an der Gleichspannungsleitung beispielsweise ein Umrichter angeschlossen, so werden dessen Ventile bei einem Kurzschluss üblicherweise gesperrt. Abhängig von der Ausgestaltung des Umrichters fließt der Gleichstrom aufgrund von in der Gleichspannungsleitung vorhandenen Leitungsinduktivitäten, die in Figur 2 durch Induktivitäten 40, 41 angedeutet sind, jedoch weiter. Daher kann sich im mechanischen Schalter 21 ein Lichtbogen ausbilden, der gelöscht werden muss, um den Stromfluss durch den mechanischen Schalter 21 zu unterbrechen.

Wird der Impulsschalter 33 eingeschaltet, so bewirkt dies eine Entladung des Kondensators 31. Gemäß den Regeln eines Schwingkreises geht die Energie des Kondensators 31 in die Induktivität 32 über, so dass anschließend der Kondensator 31 umgepolt wird. Die Spannung des umgepolten Kondensators 31 ist dabei insbesondere durch die Schwellenspannung des Ableiters 38 begrenzt. Zu diesem Zeitpunkt ist der Kondensator 31 entgegen der Stromrichtung des abzuschaltenden Gleichstromes geladen. Es wird also ein Stromimpuls erzeugt, der im Überbrückungszweig 25 zwischen dem ersten Knotenpunkt 26 und dem zweiten Knotenpunkt 27 sowie zwischen dem zweiten Knotenpunkt 27 und dem dritten Knotenpunkt 28 in Durchlassrichtung der Dioden 36, 37 und im mechanischen Schalter 21 entgegen der durch den Pfeil 23 dargestellten Stromrichtung des abzuschaltenden Gleichstromes fließt. Auf diese Weise wird im mechanischen Schalter ein Stromnulldurchgang erzeugt und der Lichtbogen gelöscht. Von einem Stromimpuls wird in diesem Zusammenhang gesprochen, weil die Zeit zwischen dem Einschalten des Impulsschalters und dem Verlöschen des Lichtbogens sehr kurz ist. Sie wird vornehmlich durch die Parameter der Induktivität 32 und des Energiespeichers 31 bestimmt.

Bei einem Nulldurchgang des Stromes in der Stromimpulseinheit 5 schaltet sich der Impulsschalter aus. Der abzuschaltende Gleichstrom kann nun weder über den mechanischen Schalter 21 noch über die gegensinnig gepolte Halbleiterdiode 24 fließen. Stattdessen fließt der abzuschaltende Gleichstrom über einen zum mechanischen Schalter 21 parallelen Strompfad im Überbrückungszweig 25. Dabei wird der Kondensator 21 vom abzuschaltenden Gleichstrom erneut umgepolt. Der Kondensator 21 kann also in dessen Ursprungszustand zurückkehren. Die Spannung am Kondensator 21 wird dabei wiederum durch die entsprechende Schwellenspannung des Überspannungsableiters 35 bestimmt.

Die im abzuschaltenden Gleichstrom vorhandene Energie kann demnach sowohl im nichtlinearen Widerstandselement 38 als auch im Überspannungsableiter 35 abgebaut werden. Auf diese Weise wird der Gleichstrom schließlich abgeschaltet.

In Figur 3 ist eine Anordnung von mehreren Vorrichtungen 201, 202 zum Schalten eines Gleichstromes in einer Gleichspannungsleitung dargestellt. Die Gleichspannungsleitung umfasst dabei einen Gleichspannungsleiter 22 und einen Gleichspannungs-Rückleiter 29, der hier als Erdleiter realisiert ist. Die Leitungsinduktivität der Gleichspannungsleitung ist in Figur 3 als Induktivität 42 schematisch dargestellt.

Die Vorrichtungen 201 und 202 sind zu der in Figur 2 gezeigten Vorrichtung 20 gleichartig aufgebaut, so dass aus Gründen der Übersichtlichkeit auf den Aufbau der Vorrichtungen 201, 202 nicht näher eingegangen wird. Die punktierten Linien 43 und 44 deuten an, dass zwischen den beiden Vorrichtungen 201 und 202 weitere gleichartige Vorrichtungen zum Schalten des Gleichstromes angeordnet sein können.

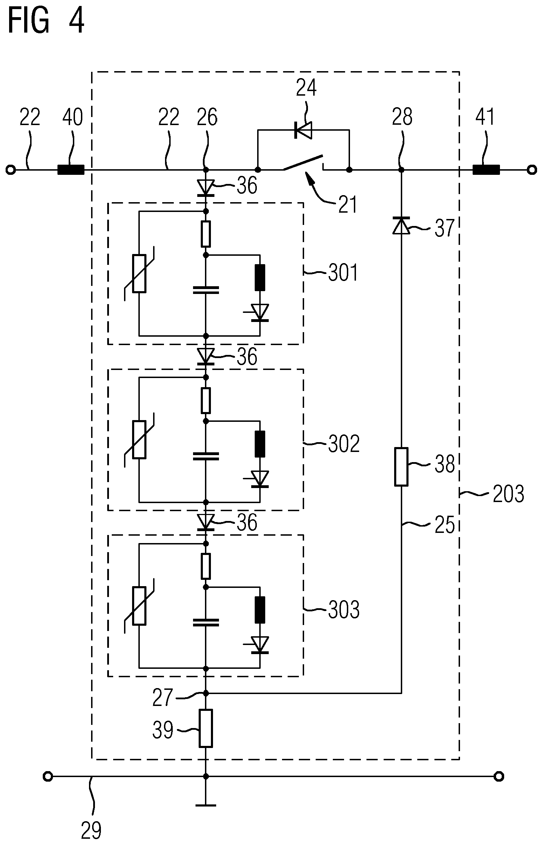

Figur 4 zeigt ein weiteres Ausführungsbeispiel einer erfindungsgemäßen Vorrichtung 203. In den Figuren 2 und 4 sind gleiche und gleichartige Teile mit gleichen Bezugszeichen versehen. Im Folgenden wird aus Übersichtlichkeitsgründen nur auf die Unterschiede der beiden Ausführungsbeispiele näher eingegangen.

Im Unterschied zu der Vorrichtung 30 der Figur 2 umfasst die in Figur 4 gezeigte Vorrichtung 203 anstelle einer einzelnen zweipoligen Stromimpulseinheit 30 eine Reihenschaltung von zweipoligen Stromimpulseinheiten 301, 302, 303. Die Stromimpulseinheiten 301, 302 und 303 sind zur Stromimpulseinheit 30 gleichartig aufgebaut. Dabei ist jedoch zu beachten, dass die Auslegung der einzelnen Bauteile innerhalb der Stromimpulseinheiten, wie beispielsweise die Parameter der Kondensatoren und/oder der Überspannungsableiter sich von der Auslegung der entsprechenden Bauteile der Stromimpulseinheit 30 der Vorrichtung 20 aus Figur 2 unterscheiden kann.

In Figur 4 sind vier Stromimpulseinheiten 301 - 303 grafisch dargestellt. Es ist jedoch denkbar, dass die Reihenschaltung der Stromimpulseinheiten eine beliebige, der jeweiligen Anwendung entsprechende Anzahl von Stromimpulseinheiten umfasst.

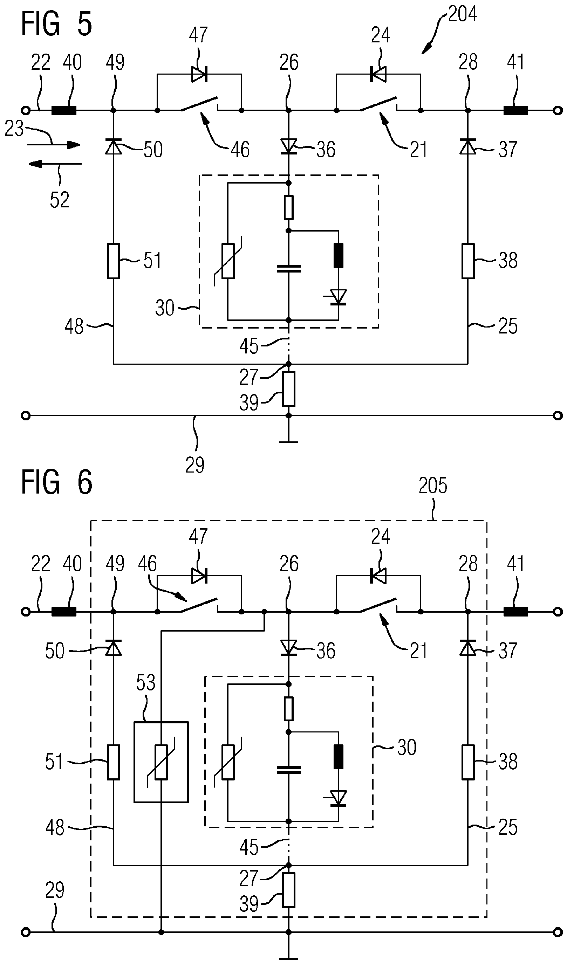

In Figur 5 ist ein weiteres Ausführungsbeispiel der erfindungsgemäßen Vorrichtung 304 dargestellt. Mittels der Vorrichtung 304 kann ein Gleichstrom unabhängig von dessen Stromrichtung geschaltet werden.

In den Figuren 2 und 5 sind gleiche und gleichartige Teile mit gleichen Bezugszeichen versehen, so dass im Zusammenhang mit dem Ausführungsbeispiel der Figur 5 lediglich auf die Unterschiede zwischen dieser und der Ausführungsform der Figur 2 im Detail eingegangen wird.

Die Vorrichtung 204 umfasst einen weiteren mechanischen Schalter 46, dem eine weitere Halbleiterdiode 47 parallel geschaltet ist. Die Durchlassrichtungen der beiden Halbleiterdioden 24 und 47 sind einander entgegengesetzt.

Die Vorrichtung 204 umfasst ferner einen weiteren Überbrückungszweig 48. Der weitere Überbrückungszweig 48 erstreckt sich zwischen dem ersten Knotenpunkt 26 und einem vierten Knotenpunkt 49. Der weitere Überbrückungszweig 48 weist zudem eine Diode 50 und ein nichtlineares Widerstandselement 51, wobei die Dioden 37 und 50 sowie die Widerstandselemente 38 und 51 jeweils gleichartig aufgebaut sind.

Es ist in Figur 5 zu erkennen, dass der Überbrückungszweig 25 und der weitere Überbrückungszweig 48 teilweise zusammenfallen, und zwar in einem Teilabschnitt zwischen dem ersten Knotenpunkt 26 und dem zweiten Knotenpunkt 27. In iesem Teilabschnitt ist die Stromimpulseinheit 30 angeordnet. Durch die punktierte Linie 45 ist in Figur 5 zudem angedeutet, dass unter Ausbildung einer Reihenschaltung mit der Stromimpulseinheit 30 weitere gleichartige zweipolige Stromimpulseinheiten im besagten Teilabschnitt angeordnet sein können.

Je nach vorgegebener Stromrichtung des abzuschaltenden Gleichstromes wird einer der mechanischen Schalter 21 oder 46 geöffnet (es ist jedoch auch denkbar, unabhängig von der Stromrichtung beide mechanischen Schalter zu öffnen).

Entspricht die vorgegebene Stromrichtung beispielsweise der Richtung des Pfeils 23, so wird der mechanische Schalter 21 geöffnet und mittels der Stromimpulseinheit 30 ein im mechanischen Schalter 21 entgegen der Stromrichtung fließender Stromimpuls erzeugt. Nach Verlöschen eines Lichtbogens im mechanischen Schalter 21 wird der abzuschaltende Gleichstrom über den durch den Überbrückungszweig 25 gebildeten parallelen Strompfad über die Knotenpunkte 26, 27 und 28 geführt.

Entspricht die vorgegebene Stromrichtung der Richtung eines Pfeils 52, so wird hingegen der mechanische Schalter 46 geöffnet und mittels der Stromimpulseinheit 30 ein im mechanischen Schalter 46 entgegen der vorgegebenen Stromrichtung fließender Stromimpuls erzeugt. Nach Verlöschen eines Lichtbogens im mechanischen Schalter 46 wird der abzuschaltende Gleichstrom über den durch den Überbrückungszweig 48 gebildeten parallelen Strompfad über die Knotenpunkte 26, 27 und 49 geführt.

Da die Vorrichtung 204 den Gleichstrom unabhängig von dessen Stromrichtung schalten kann, wird in diesem Zusammenhang von einer bidirektionalen Ausführungsform der Erfindung gesprochen.

Figur 6 zeigt ein nächstes Ausführungsbeispiel einer erfindungsgemäßen Vorrichtung 205. In den Figuren 5 und 6 sind gleiche und gleichartige Teile mit gleichen Bezugszeichen versehen, so dass im Folgenden nur auf die Unterschiede in den Ausführungsformen der Figuren 5 und 6 näher eingegangen wird.

Die Vorrichtung 205 ist zur Vorrichtung 204 der Figur 5 gleichartig aufgebaut, mit dem Unterschied, dass die Vorrichtung 205 ferner einen Ableiter 53 umfasst. Der Ableiter 53 hat die Funktion, nachteilige Potenzialüberhöhungen zwischen dem Gleichspannungsleiter 22 und dem Gleichspannungs-Rückleiter 29 zu begrenzen. Dazu ist der Ableiter 53 in einem Leiterzweig angeordnet, dessen eines Ende mit dem Gleichspannungsleiter 22 am ersten Knotenpunkt 26 und mit einem anderen Ende mit dem Gleichspannungs-Rückleiter 29 verbunden.

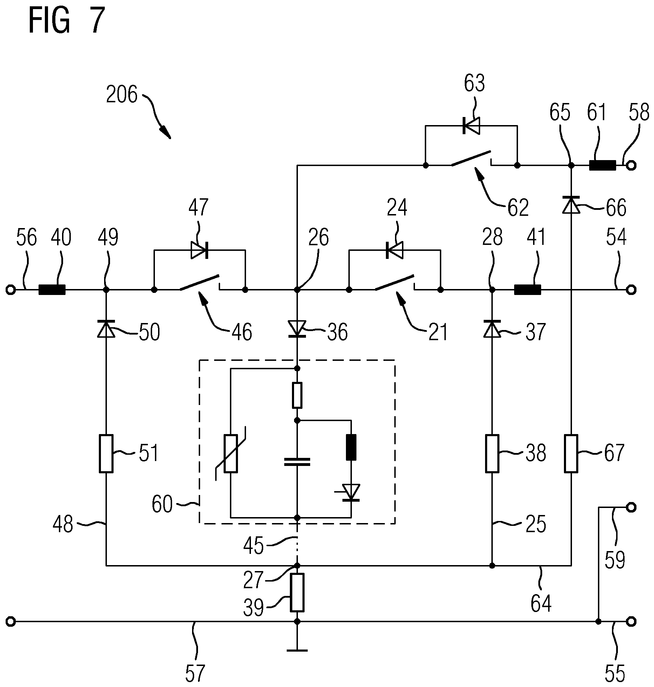

In Figur 7 ist ein Ausführungsbeispiel einer erfindungsgemäßen Vorrichtung 206 in einem Netzknoten eines Gleichspannungsnetzes dargestellt. Bei der Darstellung der Figuren 6 und 7 sind im Allgemeinen gleiche und gleichartige Teile mit gleichen Bezugszeichen versehen, so dass auf die bereits zuvor beschriebenen Komponenten nicht näher eingegangen werden braucht.

Der Netzknoten des Gleichspannungsnetzes umfasst drei Leitungsabgänge. Der erste Leitungsabgang umfasst einen ersten Gleichspannungsleiter 54 und einen ersten Gleichspannungs-Rückleiter 55, der hierbei ein Nullleiter ist. Der zweite Leitungsabgang umfasst einen zweiten Gleichspannungsleiter 56 und einen zweiten Gleichspannungs-Rückleiter 57, der hierbei ebenfalls ein Nullleiter ist. Der dritte Leitungsabgang umfasst einen dritten Gleichspannungsleiter 58 und einen dritten Gleichspannungs-Rückleiter 59, der auch ein Nullleiter ist. Jedem der Leitungsabgänge ist eine Leitungsinduktivität zugeordnet, die durch die Induktivitäten 40, 41 und 61 entsprechend der Darstellungen der vorstehenden Figuren 2 bis 6 repräsentiert sind.

Der erste, der zweite und der dritte Gleichspannungsleiter 54, 56 und 58 laufen in einem ersten Knotenpunkt 26 zusammen.

Dem ersten Gleichspannungsleiter 54 ist ein erster mechanischer Schalter 21 zugeordnet, dem zweiten Gleichspannungsleiter 56 ist ein zweiter mechanischer Schalter 46 zugeordnet und dem dritten Gleichspannungsleiter 58 ist ein dritter mechanischer Schalter 62 zugeordnet. Die Durchlassrichtung der jeweils parallel zu den mechanischen Schaltern 21, 46 und 62 angeordneten Halbleiterdioden 24, 47 bzw. 63 ist jeweils zu dem ersten Knotenpunkt 26 hin gerichtet.

Darüber hinaus ist dem ersten mechanischen Schalter 21 ein erster Überbrückungszweig 25 zugeordnet, der sich zwischen dem ersten Knotenpunkt 26 und einem dritten Knotenpunkt 28 erstreckt. Der erste Überbrückungszweig 25 umfasst eine Stro mimpulseinheit 60, die in einem Teilabschnitt des ersten Überbrückungszweiges 25 zwischen dem ersten Knotenpunkt 26 und einem zweiten Knotenpunkt 27 angeordnet ist.

Dem zweiten mechanischen Schalter 46 ist ein zweiter Überbrückungszweig 48 zugeordnet, der sich zwischen einem vierten Knotenpunkt 49 und dem ersten Knotenpunkt 26 erstreckt. Der zweite Überbrückungszweig 48 umfasst die Stromimpulseinheit 60, die in einem Teilabschnitt des zweiten Überbrückungszweiges 48 zwischen dem ersten Knotenpunkt 26 und dem zweiten Knotenpunkt 27 angeordnet ist.

Dem dritten mechanischen Schalter 62 ist ein dritter Überbrückungszweig 64 zugeordnet, der sich zwischen dem ersten Knotenpunkt 26 und einem fünften Knotenpunkt 65 erstreckt. Der dritte Überbrückungszweig 64 umfasst die Stromimpulseinheit 60, die in einem Teilabschnitt des dritten Überbrückungszweiges 64 zwischen dem ersten Knotenpunkt 26 und dem zweiten Knotenpunkt 27 angeordnet ist. Der dritte Überbrückungszweig 64 umfasst darüber hinaus eine Diode 66 sowie ein nichtlineares Widerstandselement 67.

Der erste, der zweite und der dritte Überbrückungszweig 25, 48 und 64 fallen auf einem Teilabschnitt zwischen dem ersten Knotenpunkt 26 und dem zweiten Knotenpunkt 27 zusammen.

Die Stromimpulseinheit 60 der Figur 7 entspricht in ihrem Aufbau der Stromimpulseinheit 30 der Figur 6.

Die Vorrichtung 206 ist dazu geeignet, einen Gleichstrom im Netzknoten unabhängig von dessen Stromrichtung zu schalten. Die Funktionsweise der Vorrichtung 206 unterscheidet sich dabei grundsätzlich nicht von der Funktionsweise der zuvor beschriebenen erfindungsgemäßen Vorrichtungen.

### Bezugszeichenliste

1 bekannte Vorrichtung zum Schalten eines Gleichstromes
2, 3 steuerbarer Schalter
4 Gleichspannungsleiter
5 Stromimpulseinheit
6 Energiespeicher
7 Impulsschalter
8 Induktivität
9 Gleichspannungs-Rückleiter
10, 11 Dämpfungszweig
12 Pfeil
13, 14, 15, 16 Knotenpunkt
20, 201, 202, 203 Vorrichtung zum Schalten eines Gleichstromes
204, 205, 206 Vorrichtung zum Schalten eines Gleichstromes
21 steuerbarer Schalter
22 Gleichspannungsleiter
23 Pfeil
24 Halbleiterdiode
25 Überbrückungszweig
26 erster Knotenpunkt
27 zweiter Knotenpunkt
28 dritter Knotenpunkt
29 Gleichspannungs-Rückleiter
30, 301, 302, 303 Stromimpulseinheit
31 Kondensator
32 Induktivität
33 Impulsschalter
34 Stromimpuls-Widerstand
35 Überspannungsableiter
36, 37 Diode
38 nichtlineares Widerstandselement
39 Vorladewiderstand
40, 41, 42 Leitungsinduktivität
43, 44, 45 punktierte Linie
46 weiterer mechanischer Schalter
47 weitere Halbleiterdiode
48 weiterer Überbrückungszweig
49 vierter Knotenpunkt
50 Diode
51 nichtlineares Widerstandselement
52 Pfeil
53 Ableiter
54, 56, 58 Gleichspannungsleiter
55, 57, 59 Gleichspannungs-Rückleiter
60 Stromimpulseinheit
61 Leitungsinduktivität
62 mechanischer Schalter
63 Halbleiterdiode
64 dritter Überbrückungszweig
65 fünfter Knotenpunkt
66 Diode
67 nichtlineares Widerstandselement

## Patentansprüche

1. Vorrichtung (20, 201 - 206) zum Schalten eines Gleichstromes in einer Gleichspannungsleitung umfassend
- einen seriell in einen Gleichspannungsleiter (22) der Gleichspannungsleitung einfügbaren Betriebsstromzweig mit einem steuerbaren Schalter (21),
- eine zweipolige Stromimpulseinheit (30) mit einem Parallelschwingkreis aus einem kapazitiven Energiespeicher (31) und einer dazu parallel geschalteten, eine Induktivität (32) und einen steuerbaren Impulsschalter (33) aufweisenden Reihenschaltung, wobei durch Schalten des Impulsschalters (33) ein Impulsstrom erzeugbar ist, der entgegen dem zu schaltenden Gleichstrom fließt und einen Stromnulldurchgang im steuerbaren Schalter (21) bewirkt,
dadurchgekennzeichnet, dass die Stromimpulseinheit (30) in einem von einem elektrischen Potenzial eines Gleichspannungs-Rückleiters (29) der Gleichspannungsleitung entkoppelten Überbrückungszweig (25) angeordnet ist, der einen Strompfad parallel zum steuerbaren Schalter (21) ausbildet, wobei der Impulsstrom in einer durch den Betriebsstromzweig und den parallelen Strompfad gebildeten Masche fließt, wobei die Vorrichtung (20) ferner eine Vorladeeinheit (39) umfasst, wobei der Energiespeicher mittels der Vorladeeinheit (39) aufgeladen werden kann, wobei die Vorladeeinheit einen zwischen der Stromimpulseinheit (30) und dem Gleichspannungs-Rückleiter angeordneten Vorladewiderstand (39) umfasst.

2. Vorrichtung (20) nach Anspruch 1, wobei ein Überspannungsableiter (35) in Parallelschaltung zu einer Reihenschaltung vorgesehen ist, die den Energiespeicher (31) sowie einen Stromimpulseinheit-Widerstand (34) umfasst.

3. Vorrichtung (20) nach Anspruch 1 oder 2, wobei ein resistives Bauelement (38) vorgesehen ist, der derart im Überbrückungszweig (25) angeordnet ist, dass der abzuschaltende Gleichstrom über das resistive Bauelement (38) geführt werden kann.

4. Vorrichtung (20) nach einem der vorangehenden Ansprüche, wobei der steuerbare Schalter (21) ein mechanischer Schalter ist.

5. Vorrichtung (20) nach einem der vorangehenden Ansprüche, wobei die Induktivität (32) als eine Luftspule, eine sättigbare Spule oder eine Kombination der beiden ausgebildet ist.

6. Vorrichtung (20) nach einem der vorangehenden Ansprüche, wobei der Überbrückungszweig (25) ein in Reihe zur Stromimpulseinheit (30) geschaltetes Halbleiterelement (36, 37) mit einer Durchlassrichtung und einer Sperrrichtung aufweist.

7. Vorrichtung (20) nach Anspruch 6, wobei das Halbleiterelement (36, 37) eine Diode oder ein Thyristor ist.

8. Vorrichtung (205) nach einem der vorangehenden Ansprüche, wobei im Betriebsstromzweig ein weiterer steuerbarer Schalter (46) angeordnet ist, wobei dem weiteren steuerbaren Schalter (46) eine in Stromrichtung des abzuschaltenden Gleichstromes leitfähige Halbleiterdiode (47) parallel geschaltet ist, und wobei ein weiterer Überbrückungszweig (48) vorgesehen ist, der einen den weiteren steuerbaren Schalter (46) überbrückenden Strompfad ausbildet, wobei die Stromimpulseinheit (30) im weiteren Überbrückungszweig (48) angeordnet ist.

9. Vorrichtung (203) nach einem der vorangehenden Ansprüche, wobei die Vorrichtung (203) eine Mehrzahl weiterer zweipoliger Stromimpulseinheiten (302-303) umfasst, wobei die Stromimpulseinheit (301) und die weiteren Stromimpulseinheiten (302-303) gleichartig ausgebildet sind und im Überbrückungszweig (25) eine Reihenschaltung ausbilden.

10. Vorrichtung (205) nach einem der vorangehenden Ansprüche, wobei zwischen dem Gleichspannungsleiter (22) und dem Gleichspannungs-Rückleiter (29) ein Ableiter (53) zur Begrenzung von Potenzialänderungen geschaltet ist.

11. Verfahren zum Schalten eines Gleichstromes in einer Gleichspannungsleitung, bei dem auf einen Steuerbefehl hin
- ein seriell in einen Gleichspannungsleiter (22) der Gleichspannungsleitung eingefügter steuerbarer Schalter (21) geöffnet wird, und
in einer zweipoligen Stromimpulseinheit (30), die in einem Überbrückungszweig (25), der einen zum steuerbaren Schalter (21) parallelen Strompfad ausbildet, angeordnet ist und
einen Parallelschwingkreis aus einem kapazitiven Energiespeicher (31) und einer dazu parallel geschalteten, eine Induktivität (32) und einen steuerbaren Impulsschalter (33) aufweisenden Reihenschaltung umfasst,
der Energiespeicher mittels einer Vorladeeinheit (39) vorgeladen wird, wobei die Vorladeeinheit einen zwischen der Stromimpulseinheit (30) und dem Gleichspannungs-Rückleiter angeordneten Vorladewiderstand (39) umfasst,
- der Impulsschalter (33) geschaltet wird, so dass der Energiespeicher (31) umgepolt und der umgepolte Energiespeicher (31) einen Imp erzeugt, der entgegen dem abzuschaltenden Gleichstrom fließt und einen Stromnulldurchgang im steuerbaren Schalter (21) bewirkt.

12. Verfahren nach Anspruch 11, bei dem der abzuschaltende Gleichstrom über ein im Überbrückungszweig (25) angeordnetes resistives Bauelement (38) geführt wird.

## Claims

1. Apparatus (20, 201-206) for switching a DC current in a DC voltage line comprising
- an operating current branch that can be inserted in series into a DC voltage conductor (22) of the DC voltage line and has a controllable switch (21),
- a two-pole current pulse unit (30) having a parallel resonant circuit consisting of a capacitive energy store (31) and a series circuit that is connected in parallel therewith and has an inductor (32) and a controllable pulse switch (33), wherein switching the pulse switch (33) allows a pulse current to be generated that flows counter to the DC current to be switched and brings about a current zero crossing in the controllable switch (21),
**characterized in that**
the current pulse unit (30) is arranged in a bypass branch (25) decoupled from an electrical potential of a DC voltage return conductor (29) of the DC voltage line, which bypass branch forms a current path in parallel with the controllable switch (21), wherein the pulse current flows in a mesh formed by the operating current branch and the parallel current path, wherein the apparatus (20) further comprises a precharging unit (39), wherein the energy store can be charged by means of the precharging unit (39), wherein the precharging unit comprises a precharging resistor (39) arranged between the current pulse unit (30) and the DC voltage return conductor.

2. Apparatus (20) according to Claim 1, wherein there is provision for a surge arrester (35) connected in parallel with a series circuit that comprises the energy store (31) and a current pulse unit resistor (34).

3. Apparatus (20) according to Claim 1 or 2, wherein there is provision for a resistive component (38) that is arranged in the bypass branch (25) in such a way that the DC current to be disconnected can be conducted through the resistive component (38).

4. Apparatus (20) according to one of the preceding claims, wherein the controllable switch (21) is a mechanical switch.

5. Apparatus (20) according to one of the preceding claims, wherein the inductor (32) is in the form of an air-core coil, a saturable coil or a combination of the two.

6. Apparatus (20) according to one of the preceding claims, wherein the bypass branch (25) has a semiconductor element (36, 37) that is connected in series with the current pulse unit (30) and has a forward direction and a reverse direction.

7. Apparatus (20) according to Claim 6, wherein the semiconductor element (36, 37) is a diode or a thyristor.

8. Apparatus (205) according to one of the preceding claims, wherein a further controllable switch (46) is arranged in the operating current branch, wherein a semiconductor diode (47) that is conductive in the current direction of the DC current to be disconnected is connected in parallel with the further controllable switch (46), and wherein there is provision for a further bypass branch (48), which forms a current path that bypasses the further controllable switch (46), wherein the current pulse unit (30) is arranged in the further bypass branch (48).

9. Apparatus (203) according to one of the preceding claims, wherein the apparatus (203) comprises a plurality of further two-pole current pulse units (302-303), wherein the current pulse unit (301) and the further current pulse units (302-303) are of identical design and form a series circuit in the bypass branch (25).

10. Apparatus (205) according to one of the preceding claims, wherein an arrester (53) is connected between the DC voltage conductor (22) and the DC voltage return conductor (29) in order to limit changes in potential.

11. Method for switching a DC current in a DC voltage line, in which,
in response to a control command,
- a controllable switch (21) inserted in series into a DC voltage conductor (22) of the DC voltage line is opened, and, in a two-pole current pulse unit (30) that is arranged in a bypass branch (25) forming a current path in parallel with the controllable switch (21) and
comprises a parallel resonant circuit consisting of a capacitive energy store (31) and a series circuit that is connected in parallel therewith and has an inductor (32) and a controllable pulse switch (33),
the energy store is precharged by means of a precharging unit (39), wherein the precharging unit comprises a precharging resistor (39) arranged between the current pulse unit (30) and the DC voltage return conductor,
- the pulse switch (33) is switched such that the polarity of the energy store (31) is reversed and the energy store (31) of reversed polarity generates a pulse current that flows counter to the DC current to be disconnected and brings about a current zero crossing in the controllable switch (21).

12. Method according to Claim 11, in which the DC current to be disconnected is conducted through a resistive component (38) arranged in the bypass branch (25).

## Revendications

1. Montage (20, 201 à 206) pour faire passer un courant continu dans une ligne de tension continue, comprenant
- une branche de courant de fonctionnement, pouvant être insérée en série dans un conducteur (22) de tension continue de la ligne de tension continue et ayant un interrupteur (21) qui peut être commandé,
- une unité (30) bipolaire d'impulsion de courant, ayant un circuit oscillant parallèle constitué d'un accumulateur (31) d'énergie capacitif et d'un circuit série monté en parallèle à lui et ayant une inductance (32) et un interrupteur (33) à impulsion pouvant être commandé, dans lequel en fermant l'interrupteur (33) à impulsion peut être produit un courant, un courant à impulsion, qui passe en sens contraire au courant continu à faire passer et qui provoque un passage par zéro du courant dans l'interrupteur (21) pouvant être commandé,
**caractérisé en ce que**
l'unité (30) à impulsion de courant est montée dans une branche (25) de shuntage, découplée d'un potentiel électrique d'un conducteur (29) de retour de tension continue de la ligne de tension continue, branche qui constitue un trajet de courant parallèlement à l'interrupteur (21) pouvant être commandé, le courant à impulsion passant dans une maille formée par la branche de courant de fonctionnement et par le trajet de courant parallèle, le montage (20) comprenant en outre une unité (39) de précharge, l'accumulateur d'énergie pouvant être chargé au moyen de l'unité (39) de précharge, l'unité de précharge comprenant une résistance (39) de précharge montée entre l'unité (30) à impulsion de courant et le conducteur de retour de tension continue.

2. Montage (20) suivant la revendication 1, dans lequel il est prévu une parasurtension (35) dans un circuit parallèle à un circuit série, qui comprend l'accumulateur (31) d'énergie ainsi qu'une résistance (34) de l'unité à impulsion de courant.

3. Montage (20) suivant la revendication 1 ou 2, dans lequel il est prévu un composant (38) résistif, qui est monté dans la branche (25) de shuntage de manière à pouvoir faire passer le courant continu à interrompre par le composant (38) résistif.

4. Montage (20) suivant l'une des revendications précédentes, dans lequel l'interrupteur (21) pouvant être commandé est un interrupteur mécanique.

5. Montage (20) suivant l'une des revendications précédentes, dans lequel l'inductance (32) est constituée sous la forme d'une bobine à air, d'une bobine saturable ou d'une combinaison des deux.

6. Montage (20) suivant l'une des revendications précédentes, dans lequel la branche (25) de shuntage a un élément (36, 37) à semi-conducteur, qui est monté en série avec l'unité (30) à impulsion de courant et qui a un sens passant et un sens bloquant.

7. Montage (20) suivant la revendication 6, dans lequel l'élément (36, 37) à semi-conducteur est une diode ou un thyristor.

8. Montage (205) suivant l'une des revendications précédentes, dans lequel, dans la branche de courant de fonctionnement, est monté un autre interrupteur (46) pouvant être commandé, une diode (47) à semi-conducteur conductrice dans le sens du courant continu à interrompre étant montée en parallèle à l'autre interrupteur (46) pouvant être commandé et dans lequel il est prévu une autre branche (48) de shuntage, qui constitue un trajet de courant shuntant l'autre interrupteur (46) pouvant être commandé, l'unité (30) à impulsion de courant étant montée dans l'autre branche (48) de shuntage.

9. Montage (203) suivant l'une des revendications précédentes, dans lequel le montage (203) comprend une pluralité d'autres unités (302-303) bipolaires à impulsion de courant, l'unité (301) à impulsion de courant et les autres unités (302-303) à impulsion de courant étant constituées pareillement et constituant un circuit série dans la branche (25) de shuntage.

10. Montage (205) suivant l'une des revendications précédentes, dans lequel un paramètre (53) pour la limitation de variation de potentiel est monté entre le conducteur (22) de tension continue et le conducteur (29) de retour de tension continue.

11. Procédé pour faire passer un courant continu dans une ligne de tension continue, dans lequel
sur une instruction de commande
- on ouvre un interrupteur (21) pouvant être commandé et inséré en série dans un conducteur (22) de tension continue de la ligne de tension continue, et
dans une unité (30) bipolaire à impulsion de courant, qui est montée dans une branche (25) de shuntage, qui constitue un trajet de courant parallèle à l'interrupteur (21) pouvant être commandé, et qui
comprend un circuit oscillant parallèle, composé d'un accumulateur (21) d'énergie capacitif et d'un circuit série monté en parallèle à lui, et ayant un inductance (32) et un interrupteur (33) à impulsion pouvant être commandé,
on précharge l'accumulateur d'énergie au moyen d'une unité (39) de précharge, l'unité (39) de précharge comprenant une résistance (39) de précharge montée en l'unité (30) à impulsion de courant et le conducteur de retour de tension continue,
- on ferme l'interrupteur (33) à impulsion de manière à inverser la polarité de l'accumulateur (31) d'énergie et l'accumulateur (31) d'énergie, dont la polarité a été inversée, produit une impulsion qui passe dans le sens contraire au courant continu à interrompre et provoque un passage par zéro du courant dans l'interrupteur (21) pouvant être commandé.

12. Procédé suivant la revendication 11, dans lequel on fait passer le courant continu à interrompre par un composant (38) résistif monté dans la branche (25) de shuntage.
